# EUROPEAN PATENT SPECIFICATION

(11) **EP 1 084 151 B1**
(45) Date of publication and mention of the grant of the patent: **21.06.2006**
(21) Application number: 99913825.8
(22) Date of filing: 26.03.1999
(51) Int. Cl.: C08F 4/06, C08F 4/40, C08F 291/04, C08F 4/10, C08F 2/16

(54) **APPLICATION OF ATOM TRANSFER RADICAL POLYMERIZATION TO WATER-BORNE POLYMERIZATION SYSTEMS**
ANWENDUNG VON ATOMÜBERTRAGUNGS-RADIKALPOLYMERISATION AUF WÄSSRIGE POLYMERISATIONSSYSTEME
APPLICATION DE POLYMERISATION RADICALAIRE PAR TRANSFERT D'ATOMES POUR SYSTEMES DE POLYMERISATION A DISPERSION DANS L'EAU

(30) Priority: 30.03.1998 US 79805 P; 31.07.1998 US 126768
(43) Date of publication of application: 21.03.2001
(73) Proprietor: CARNEGIE MELLON UNIVERSITY, Pittsburgh, PA 15213-2683 (US)
(72) Inventor: MATYJASZEWSKI, Krzysztof, Pittsburgh, PA 15238 (US); GAYNOR, Scott, G., Pittsburgh, PA 15213 (US); QIU, Jian, Pittsburgh, PA 15232 (US); TEODORESCU, Mircea, R-78126 Bucharest (RO)
(74) Representative: Winter, Brandl, Fürniss, Hübner Röss, Kaiser, Polte Partnerschaft Patent- und Rechtsanwaltskanzlei
(86) International application number: PCT/US1999/004274
(87) International publication number: WO 1999/050310

(56) References cited:
- US-A- 5 789 487

## Description

### Field of Invention:

The present invention relates to a process for the preparation of (co)polymers by controlled/"living" atom transfer radical polymerization in an emulsion or suspension, and the emulsions and suspensions prepared thereby.

### Discussion of the Background:

In order to obtain well defined polymers (with respect to characteristics such as predefined molecular weight, narrow molecular weight distribution, well defined end groups, composition and architecture), "living" or controlled chain growth polymerizations are often employed. *Webster, O.* Science **1991,** *251, 887.* These polymerizations are special in that chain breaking reactions, such as termination or transfer, are minimized such that their contribution to the overall polymerization is negligible. Such polymerizations are characterized by initiation where one initiator molecule generates, at most, one polymer chain and that all polymer chains grow at nearly the same time. This results in polymers whose number average molecular weight is defined by Mₙ = MW*(Δ[M]/[I]ₒ)+MWᵢₙₜ, where Δ[M] is the concentration of consumed monomer, [I]ₒ is the concentration of added initiator, MWₘ and MWᵢₙₜ are the molar masses of the monomer and added initiator, respectively. The molecular weight distributions, defined as MWD = M_{w}/Mₙ, are generally narrow, with MWD < 1.5.

The first living polymerizations were those based on the ionic polymerization of vinyl monomers. *Webster, O.* Science **1991**, *251*, 887. Unfortunately, these types of polymerizations require the complete absence of water from the reaction mixture, and therefore, can not be conducted as emulsions or suspensions in water. Living polymerizations based on free radical mechanisms are only a recent development, as the ability of propagating radicals to react with one another (through combination, chain transfer or disproportionation for example) made reduction of termination reactions very difficult. Two current methods of "living"/controlled radical polymerization are TEMPO (2,2,6,6-tetramethyl-1-piperidinoxyl radical) mediated polymerizations [USP 4,581,429 and USP 5,322,912] and atom transfer radical polymerization (ATRP).[USP 5,763,548; Serial #s: 09/034,187, 08/559,309, 08/677,828, 08/940,985, 09/018,554]

Nearly all controlled/"living" radical polymerizations, however, have been confined to bulk or solution polymerization. Although some polymerizations have been conducted in water, either as homogeneous *(Coca, S., et al.* J. Polym. Sci., Polym. Chem. Ed. **1998**, *36*, 1417) or biphasic mixtures, *(Nishikawa, T. et al.,* Macromolecules *1997, 30, 2244.)* the preparation of well-defined polymers by emulsion or suspension systems has not been reported. Both seeded *(Bon, S. A. F et al,* Macromolecules **1997***, 30,* 324) and unseeded *(Marestin, C. et al.,* Macromolecules **1998**, *31*, 4041.) emulsion polymerizations of styrene have been conducted with TEMPO-mediated polymerization systems, but TEMPO mediated polymerizations are generally successful only for polymerizations which predominately contain styrene, or derivatives of styrene, as monomers. Seeded emulsions are not desirable as the use of high molecular weight polymer as the seed will not conform to the same molecular weight of the final polymer and hence, introduce broader molecular weight distributions or differences in functionality. Also, TEMPO mediated polymerizations in general require the use of temperatures greater than 100 °C, requiring the use of specialized equipment to conduct the polymerizations to high conversions. The use of ATRP in emulsions *(Makino, T. et al.,* Polym. Prepr. (Am. Chem. Soc., Div. Polym. Chem.) **1998**, *39(1),* 288.) or suspensions *(Granel, C. et al.,* Macromolecules **1996**, *29*, 8576.) has been reported but the resulting polymers were not well-defined as evidenced by broad molecular weight distributions and the theoretical molecular weights that did not correspond with predicted values (DPₙ = Δ [M]/[I]ₒ) nor did the molecular weights increase with conversion in a linear fashion. Other work previously reported to produce aqueous block copolymer dispersions and emulsions using azo macroinitiators (USP 5,741,845) also produces products with broad molecular weight distributions and no control over polymer architecture and end group functionalization.

Polymerizations carried out in heterogeneous systems, such as suspensions or emulsions in inorganic media are desirable for many reasons. By polymerizing organic monomers in water or CO₂ as the reaction medium, the use of volatile organic compounds in preparation, processing or application of the polymer can be reduced or eliminated; the continuous phase can better dissipate heat generated by the polymerization, allowing for the monomers to be polymerized in bulk, and may enhance the polymerization rate of some monomers; polymerization in an emulsion or suspension can result in a reduction of viscosity of the system at high monomer to polymer conversion and can produce products of direct interest in various applications.

### SUMMARY OF THE INVENTION

The above object of the present invention can be achieved with the process of the present invention for the preparation of a (co)polymer emulsion or suspension prepared by controlled/"living" free radical polymerization, comprising:
polymerizing one or more radically (co)polymerizable monomers in the presence of a system initially comprising:
   (a) a suspending medium,
   (b) a surfactant,
   (c) an initiator having one or more radically transferable atoms or groups,
   (d) a catalyst system comprising;
      (i) a transition metal compound capable of participating in a redox cycle with the initiator and,
      (ii) one or more N-, 0-, P or S- containing ligands which coordinate in a σ-bond or in a π-bond to the transition metal, any C containing compound which can coordinate in a π-bond to the transition metal, or any carbon containing ligand which coordinates in a carbon-transition metal σ-bond but which does not form a carbon-carbon bond with said monomer under the polymerization conditions, wherein said catalyst system, in both oxidation states, is at least partially soluble in the monomer/polymer phase generated during said polymerizing,
to form a (co)polymer emulsion or suspension.

A further aspect of the present invention is a (co) polymer emulsion or suspension prepared by the above process of the present invention, wherein the (co) polymer contained therein exhibits one or more characteristics selected from the group consisting of predefined molecular weight, narrow molecular weight distribution, well-defined end groups, controlled composition, and controlled architecture.

### DETAILED DESCRIPTION OF THE PREFERRED EMBODIMENTS

For the first time, (co)polymers from a full range of free radically (co)polymerizable monomers exhibiting the characteristics of "living" polymerization, i.e. predictable molecular weights and narrow, or controllable, molecular weight distributions, combined with the ability to prepare block, graft and comb shaped copolymers, and (hyper)branched copolymers, were produced in an emulsion system.

The stability of the emulsion can be tailored in the present process to allow for catalyst free recovery of the polymer or to produce stable emulsions or suspensions suitable for use in the production of paints, adhesives, impact modifiers, etc. Previous methods for the preparation of such polymers have depended on the use of chemistry and solvents which can be regarded as problematic in relation to environmental considerations and industrial hygiene. For this reason the present invention describes the preparation of dispersions or emulsions in inorganic media.

The invention relates to the preparation of well-defined polymeric materials, including polymers of predefined molecular weight, narrow molecular weight distribution, well-defined end groups, composition, and architecture, by radical polymerization in an emulsion or suspension system using an inorganic liquid as suspension medium, such as one using water as the suspension or dispersion medium. The preparation of such well-defined materials is highly desired as they have novel properties which can be designed so that the final properties of the bulk material are tailored to a specific application.

ATRP initiates controlled radical polymerization by reaction of the initiator, R-X, with a transition metal, Mᵢⁿ. The radically transferable atom or group, X, is abstracted by the metal center to form a higher oxidation state species, X-Mₜⁿ⁺¹, and the radical R, with R being any organic or inorganic molecule that can be present as a radical. The radical can then initiate polymerization, react with X-Mₜⁿ⁺¹ or terminate with another radical. When the radical reacts with monomer and propagates, the oligomeric radical will react with X-M₁ⁿ⁺¹ to form a polymer chain with the initiator fragment at one end and the radically transferable atom or group at the other end and a lower oxidation state metal. The lower oxidation state transition metal can then react with the radically transferable atom or group at the chain end to reinitiate polymerization. By repetition of this process, the polymer chain gradually grows in a controlled manner. Any termination of the radicals generates a small excess amount of X-Mₜⁿ⁻¹ which allows for faster reaction between the radicals and X-Mₜⁿ⁻¹. This process is summarized in Scheme 1.

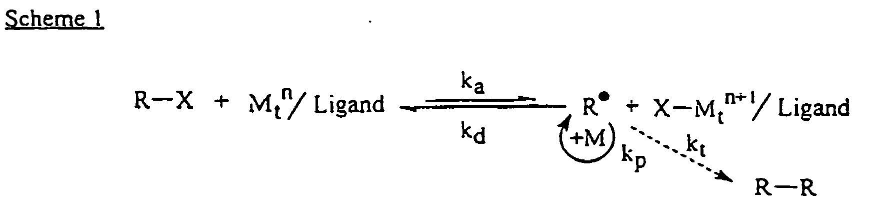

A special case of ATRP is where the transition metal is initially present as X-Mₜⁿ⁺¹ and reacts with radicals generated by a conventional radical initiator to generate Mₜⁿ and R-X *in situ*; this process is termed "reverse" ATRP. Another variation is *in situ* generation of the catalyst. This occurs when the transition metal is initially present as X-Mₜⁿ⁻¹ and reacts with a reducing agent, such as a zero valent metal, to generate Mₜⁿ.

ATRP is disclosed in U.S. Patent 5,763,548 and U.S. application serial nos: 09/034,187; 08/559,309; 08/677,828; 08/940,985; and 09/018,554.

The initiator can be any molecule containing a radically transferable atom or group, including macromolecules. When the initiator is a macroinitiator, any known method of polymerization or polymer modification can be used to form a suitable macroinitiator. The macromolecule may be at least partially soluble in one or more phases of the emulsion and may be at least partially soluble in all phases of the emulsion. The limitations described within the application for low molecular weight initiators will apply to macroinitiators. Initiators and macroinitiators can include the function of surfactant in a single (macro) molecule, which can be prepared in situ.

Early experiments by the present inventors on the use of ATRP in an emulsion used sodium dodecyl sulfate as an emulsifier. The use of this surfactant generally led to the formation of very high molecular weight polymer with broad polydispersities. This is now believed to be attributable to the reaction of the transition metal compound copper (II) bromide (or chloride) with the sulfate anion to form copper (II) sulfate and sodium bromide. Thus, the growing radicals could not be deactivated, as the sulfate group is not capable of being transferred to the growing radical, and the polymerization behaved as if it were a conventional, redox initiated, radical polymerization. The components used in the ATRP reaction of the present invention, e.g., surfactant or solvent, should not interfere with either the catalyst or the radicals which are generated. Such interactions will cause side reactions which are detrimental to obtaining well-defined polymer.

The transition metal that is used can be any transition metal or transition metal compound that is initially in a lower oxidation state or is reduced to the lower oxidation state in early stages of the reaction, is complexed by a ligand and capable of interacting with the initiating species having a radically transferable atom or group, to reversibly generate a radical initiating species. The metal may be Cu¹⁺, Cu²⁺, Cu⁰, Fe ²⁺ , Fe³⁺, Fe⁰, Ru²⁺, Ru³⁺, Ru⁰, Cr²⁺, Cr³⁺, Cr⁰, Mo²⁺, Mo³⁺, Mo⁰, W²⁺, W³⁺, Mn³⁺, Mn⁴⁺, Mn⁰, Rh³⁺, Rh⁴⁺, Rh⁰, Re²⁺, Re³⁺, Re⁰, Pd²⁺, Pd⁰, Ni²⁺, Ni³⁺, Ni⁰, Co⁺, Co²⁺, V²⁺, V³⁺, Zn⁺, Zn²⁺, Au⁺, Au²⁺, Ag⁺. and Ag²⁺; preferred metals are Cu¹⁺, Fe²⁺, Ru²⁺, Ni²⁺. Preferred catalyst compounds include Cu(I)Br, Cu(I)Cl, Cu(I)triflate, and Cu(II)triflate. Reverse ATRP can be conducted with transition metals that are in a higher oxidation state and which have a radically transferable atom or group as a counterion, preferred metal compounds for reverse ATRP are exemplified by CuCl₂, CuBr_{2'} FeBr₃, FeCl₃, RuCl₃, RuBr₃, NiBr₃. Most preferred catalysts for reverse ATRP include Cu(II)Br₂ and Cu(II)Cl,. The lower transition state metal catalyst can be generated *in situ* by reaction of a more stable higher oxidation state metal compound with a reductant, such as metal zero. This is exemplified by the reaction of cupric triflate with copper (0) to form cuprous triflate, or similarly in the reduction of Cu(II)Br₂ to Cu(I)Br. *Matyjaszewski, K et al.,* Macromolecules **1997**, *30*, 7348.

A ligand must be used in conjunction with the transition metal. In a conventional ATRP polymerization conducted in bulk or in solution, the catalyst (transition metal or transition metal compound complexed by ligand(s)) should be at least partially soluble. However, in order to conduct the polymerization in a heterogeneous medium (where the monomer/polymer is insoluble, or only slightly soluble, in the suspension medium, i.e., water or CO₂), the catalyst, in both oxidation states, must be at least partially soluble in the monomer/polymer. To clarify this requirement that the catalyst should be preferentially soluble in the monomer/oligomer/polymer phase consider if the lower oxidation state is not soluble. Then initiation and/or reinitiation can not occur in the polymer/monomer droplet or micelle; the catalyst must be sufficiently soluble to be able to contact and react with the initiator/oligomer/polymer containing a radically transferable atom or group/radical. Should initiation not occur, then no polymerization would be observed. Conversely if the higher oxidation state metal complex is not soluble in the organic phase then deactivation of the growing radical does not occur, and the polymerization behaves as a conventional, redox initiated polymerization, yielding polymer with high molecular weights and broad molecular weight distributions. The most important factor to consider is keeping X-Mₗⁿ⁺¹ₜ in the monomer/polymer phase. If this species is only soluble in the suspension medium, then efficient deactivation of the propagating radical can not occur.

Only when ligands are modified to allow the catalyst to meet these requirements of the reaction, such as use of ligands containing long alkyl chains to increase catalyst solubility in hydrophobic monomers targeted for polymerization, is a successful, controlled ATRP polymerization obtained in the water-borne systems of the present invention. For example, when the ligands 2,2'-bipyridyl (bpy), 4,4'-di(*t*-butyl)-2,2'-bipyridyl (dTbpy), N,N,N',N'',N"-pentamethyldiethylenetriamine (PMDETA), or tris(2-dimethylaminoethyl)amine (TREN-Me) were used to complex with the catalyst, an uncontrolled polymerization was obtained; i.e., polymers with molecular weights higher than predicted and with broad molecular weight distributions were prepared. Only when ligands with long alkyl chains (≥5 carbons per chain preferably) to preferentially solubilize the catalyst in the organic phase, such as 4,4'-di(5-nonyl)-2,2'-bipyridyl (dNbpy), 4,4'-dialkyl-2,2'-bipyridyl (dAbpy, a mixture of 5-nonyl and n-pentyl alkyl chains), bis(2-bipyridylmethyl)octylamine and 4,4',4"-tris(5-nonyl)-2,2',6',2"-terpyridyl were the emulsion polymerizations successfully controlled, i.e., OP = Δ[M]/[I]ₒ and M_{w}/Mₙ < 1.5. The use of dTbpy was successful when deactivator, e.g., Cu(II)Br₂, was added at the beginning of the polymerization, suggesting that the deactivator is only partially partitioned between the organic/water phases. These results show that the specific ligand must be chosen to meet the solubility requirements for controlled polymerization imposed by suspension medium, initiator, surfactant, other catalyst components and/or monomers/oligomers/polymers. Most preferred ligands include dNbpy, dAbpy, dTbpy, bis(2-pyridylmethyl)octylamine and 4,4',4"-tris(5-nonyl)-2,2',6',2"-terpyridyl.

A key component in the preparation of the stable emulsions of the present process is the use of a surfactant to stabilize the initial monomer suspension/emulsion and growing polymer particles and to prevent unwanted coagulation/flocculation of the particles. The surfactant may allow coagulation of the (co)polymer after polymerization of the (co)monomers to allow isolation of the (co)polymer. In order to conduct ATRP in an emulsion however, one must choose a surfactant which does not interfere with the catalyst or dormant chain end. Reaction of the surfactant with the catalyst would either prevent initiation and hence polymerization from occurring (catalyst in the lower oxidation state) or prevent deactivation of the growing radicals (catalyst in the higher oxidation state), and thus lead to an uncontrolled polymerization. Additionally, the surfactant could react with the dormant chain ends and displace the radically transferable atom or group; such a reaction would prevent the polymerization from re-initiating and would result in a decrease in the rate of polymerization with time. Suitable surfactants include non-ionic, anionic, and cationic surfactants, with cationic and non-ionic surfactants being preferred in non-buffered solutions. Particularly preferred non-ionic surfactants include polyethylene glycol, the polyoxyethylene oleyl ethers (ICI's Brij® surfactants) and the polyoxyethylene sorbitan monoakyls (ICI's Tween® surfactants). After gaining an understanding of the complex interactions we then re-examined the use of ionic surfactants and chose the cationic surfactant, dodecyl trimethyl ammonium bromide (DTMAB). This was successfully used in a controlled free radical emulsion polymerization. This demonstrates that the use of ionic surfactants is possible, as long as the surfactant does not react with the catalyst or polymer chain end. Such undesirable side reactions cause the polymerization to behave as an uncontrolled redox initiated water-borne polymerization. Such interference was not observed for the specific cationic surfactant chosen. This would indicate that interactions between the surfactant and all components of the catalyst must be considered, however within the limitations of ATRP disclosed in our other applications this allows for a broad range of options. It was also observed that regardless of the surfactant that was used, efficient stirring was necessary to obtain good dispersions or latexes. Most preferred surfactants include Tween 80, Brij 98 and dodecyltrimethylammonium bromide. The surfactant may be present in a concentration of 0,0 1 % to 50%.

The present process uses one or more radically (co)polymerizable monomers. Various monomers have been successfully polymerized using ATRP in water-borne systems as shown in the examples below. It was found that these exemplifying monomers, which are a selection of the monomers that have been demonstrated to be polymerized by ATRP in bulk or in organic solutions, were also successfully polymerized in the heterogeneous systems although the exact reaction conditions varied from monomer to monomer, i.e., surfactant, polymerization temperature, etc. The emulsions were successfully conducted with a monomer concentration of up to 50% solids. This occurred in the non-optimal laboratory conditions of a magnetically stirred round bottomed flask and indicate that higher % solids are feasible in specially designed equipment. While any radically (co)polymerizable monomer can be used, most preferred are n-butyl methacrylate, methyl methacrylate, butyl acrylate, styrene, and 2-hydroxyethyl acrylate.

The ratio of organic phase to water may be between 1:100 and 100:1, or, in certain embodiments, the ratio of organic phase to water may be between 1:10 and 10:1.

The requirements for the initiator used in these successful emulsion polymerizations by ATRP are similar to those for ATRP in bulk monomer or organic solvents: the initiator must contain at least one radically transferable atom or group. High solubility in the suspension medium is not a prerequisite for emulsion initiators as demonstrated by the use of the poorly water soluble ethyl 2-bromoisobutyrate, to initiate the emulsion polymerizations. However, the initiator may be soluble in the suspending medium.
While any order of addition of the initiator and other reaction components can be used, the order of addition of the initiator to the initial system can have an effect on the stability of the final mixture. If the initiator is introduced to the system already mixed with the monomer, coagulation of the polymer is often observed. However, if the initiator is added to a pre-emulsified reaction mixture, stable latexes are usually obtained. Suitable initiators include ethyl 2-bromoisobutyrate, methyl 2-bromopropionate, 2-hydroxyethyl 2-bromoisobutyrate, α-bromopropionitrile, ethyl 2-chloroisobutyrate, methyl 2-chloropropionate, 2-hydroxyethyl 2-chloroisobutyrate, α-chloropropionitrile, and 2-bromoisobutyric acid. Suitable initiators for reverse ATRP include potassium persulfate, 2,2-azobis(2-amidopropane)dihydrogen chloride and 2,2'-azobis(2-methylpropionamidine)dihydrochloride.

The initiator may be soluble in the organic phase.

The initiators can also be macromolecules that contain radically transferable atoms or groups. Such initiators can be added pre-formed or prepared in-situ and be used to prepare block and/or graft and comb (co)polymers. A special type of macroinitiator would be one that was water soluble, or even amphilic, or a macroinitiator that is at least partially soluble in one or more phases of the emulsion and may be at least partially soluble in all phases of the emulsion. After initiation of the ATRP reaction, the macroinitiator would be incorporated into the polymer particle and can stabilize the growing particle due to the hydrophilic segment of the macroinitiator.

Additionally, radical initiators used in non-controlled emulsion systems could be used to generate both the initiator and active ATRP catalyst in situ. This is simply an extension of the reverse ATRP systems performed in bulk monomer or organic solution *(Xia. J. et al.,* Macromolecules **1997**, 30, 7692.) to suspension, dispersion and emulsion polymerization. An example is use of the azo radical initiator 2,2'-Azobis(2-methylpropionamidine)dihydrochloride (AMPA). Unlike the prior art of U.S. Pat. 5,741,845, use of such azo initiators in "reverse" ATRP leads to controlled polymerization of the free radically polymerizable monomer on the macroinitiator with the blocks and/or grafts having a predetermined molecular weight and each captured initiator group leading to a graft or block with a known end group. AMPA which was used to exemplify this approach also generates conventional free radicals by thermal decomposition. As described in other applications these radicals could directly initiate the polymerization of the monomer, either in the aqueous phase or in micelles, which would then react with the metal complex in its higher oxidation state, that had radically transferable atoms or groups, and ligands, e.g., L₂Cu(II)Br₂. The reaction of the radical with such a species would generate an oligomeric chain with the radically transferable atom or group at a chain end, and the lower oxidation state metal center. Alternatively the free radical could react directly with the higher oxidation state metal forming an ATRP initiator and lower oxidation state catalyst. In either manner, such a system can be used for the polymerization of a wide variety of monomers and can be applied to all metal centers which are used for ATRP. As an example, the use of the AMPA/Cu(II)Br, initiator system results in emulsions with smaller particle sizes than for the ethyl 2-bromolsobutyrate/Cu(I)Br system (100 nm vs. 1000 nm). Thus demonstrating that by adjusting the reaction conditions it possible to attenuate the final particle size of the latex.

In these polymerizations, the observed molecular weights are higher than predicted, but yet still have relatively low polydispersities (Mw/Mn < 1.5). This would indicate that the initiating efficiency of the initiator is less than 1; some proportion of the radicals terminate, presumably in the aqueous phase, prior to reacting with the higher oxidation state transition metal. Because of the low polydispersity, it can be concluded that the termination occurs at very low conversion of monomer, and once the ATRP process begins to dominate, has very little bearing on the final polymer. In addition, the conventional radical initiator, potassium persulfate can be used as the initiator for the reverse ATRP emulsions. However, for this initiator to be successfully used, it was required that a buffered aqueous solution be employed for the suspension medium.

With these teachings it is now possible to prepare various types of materials or polymers based on controlled free radical polymerization of monomers as emulsions. Statistical copolymers can be prepared by simply copolymerizing two or more monomers simultaneously. A special class of copolymers, gradient copolymers, can be formed as well. These polymers have gradually changing monomer compositions along the polymer chain. Such materials are produced from two or more monomers as the result of differences in the reactivity ratios of the monomers that are being simultaneously copolymerized. Additionally, one or more monomers can be added to the reaction mixture at controlled rates, thus governing the relative concentrations of the monomers in the reaction. Such additions of monomer(s) can be by injection of the neat monomer(s) or as a second emulsion of the monomer(s). This allows for some monomers to be preferentially incorporated, relative to the others, into the polymer chain as a result of controlled concentration in addition to initial concentration and reactivity ratios.
The monomers may be added continuously, periodically, or sequentially to the polymerization process to prepare emulsions or suspensions of statistical, gradient, or block copolymers.

Block copolymers can be prepared by using a pre-formed macroinitiator to initiate the polymerization. Also, sequential addition of monomer can be used to prepare block copolymers. That is, upon the consumption of all or most of a first monomer, a second monomer is added which is then added to the polymer chain. Use of telechelic initiators lead to ABA block copolymers directly while monofunctional initiators lead to AB block copolymers. If all of the first monomer is not completely consumed prior to the addition of the second monomer, then there is a small gradient in the polymer chain until all of the first monomer is consumed and only the second monomer remains. Such materials can possess properties resulting from the tailored microdomain interface that are different from conventional block copolymers without a gradient and are potentially useful for many blending and energy absorbing applications. Blocks of more than two monomers can be prepared by successive addition, i.e., CBABC and ABC block copolymers can be prepared by addition of a third monomer after consumption of the second, and so on.

Branched and hyperbranched polymers can be prepared by (co)polymerization of AB* monomers. Such monomers have a polymerizable double bond (A) and a functional group that can initiate ATRP (B*), e.g. a radically transferable atom or group

Telechelic/End functional polymers can be prepared by using of an initiator that has two or more radically transferable atoms or groups. Thus the polymer chain will grow in more than one direction and, depending on the radically transferable atom or group employed, can be used as obtained at the end of the polymerization or can be modified by known chemistries to obtain the desired functionality. Another route to functional polymers is to use low molecular weight initiators that contain a functional group, e.g., 2-hydroxyethyl 2-bromoisobutyrate. Also, macroinitators that contain functional groups, i.e., poly(2-hydroxyethyl acrylate) or poly(dimethylaminoethyl methacrylate), can be used.

Comb shaped polymers can be prepared from macroinitiators that contain a free radically transferable atom or group on each monomer unit, or regularly along the polymer chain, such that the branches or grafts are forced to physically interact at a molecular level. The preparation of such materials in an emulsion will profoundly affect the properties of a coating formed by deposition of the emulsion on a surface.

Based on the principles detailed above, it is also possible to perform a water-in-oil emulsion/suspension controlled radical (co)polymerization. This type of emulsion is where the monomer/polymer is water soluble and the continuous phase is an organic solvent (oil). Again, the catalyst should be chosen so that it is preferentially soluble in the monomer/polymer but not in the continuous phase. This is accomplished by variation of the ligands, e.g. those ligands which were not successful for water borne emulsions and suspensions should work well in water-in-oil emulsion/suspensions.

Thus, the full range of materials capable of synthesis by ATRP, disclosed in U.S. Patent 5,763,548 and U.S. application serial nos: 09/034,187; 08/559,309; 08/677,828; 08/940,985; and 09/018,554 can be prepared in emulsion or suspension systems.

If desired, removal of the transition metal catalyst can be accomplished by addition of an ion exchange resin. This was demonstrated by use of DOWEX resin MSC-1 to remove the copper catalyst from the bulk polymerization of styrene. At the conclusion of the polymerization, the polymer was dissolved in acetone, the resin added and the mixture stirred. The color of the solution went from dark green to colorless, indicating that the copper was no longer in solution. Filtration of the resin through filter paper, and evaporation of the solvent resulted in the isolation of pristine polymer. It was observed that solvents with higher polarity were more effective in removing the catalyst; addition of small amounts of water were observed to enhance the rate of absorption of the catalyst onto the resin.

Use of the ion exchange resin also successfully removed the catalyst from emulsion polymerizations. Similar to the bulk polymerization described above, at the end of the emulsion polymerization, the DOWEX resin was added to the reaction and stirred for a period of time until the color of the latex changed from green to white and the resin was easily removed by filtration. Precipitation of the white latex into methanol yielded pristine polymer.

(Co)polymer emulsion or suspensions may be prepared by the process of the invention, wherein the (co)polymer contained in the emulsion or suspension exhibits one or more characteristics selected from the group consisting of predefined molecular; weight, narrow molecular weight distribution, well-defined end groups, controlled composition, and controlled architecture. The (co)polymers contained therein may be sufficiently stable not to significantly change properties after being held at 150 °C for several hours. The (co)polymer in the emulsion or suspension may have a molecular weight distribution (Mw/Mn) of <1.5 and known end groups.

### Examples

### Example 1

**General Procedure for Table 1**: Surfactant, ligand, and transition metal were all added to a round bottom flask equipped with a magnetic stir bar, and the flask sealed with a rubber septum. The contents of the flask were degassed by applying a vacuum and back-filling with nitrogen (three times). Degassed water and monomer were then added via syringe. The mixture was stirred until all solids were dissolved. Initiator was then added and the reaction heated to the desired temperature. Samples were taken to monitor conversion (by gas chromatography) and molecular weight (by size exclusion chromatography).

**Table 1. ATRP Emulsion Polymerization using Poly(Ethylene Glycol) as the Surfactant^{a}**

| | | | | | | | Results | | |
|---|---|---|---|---|---|---|---|---|---|
| Reference | Monomer | Initiator | Catalyst | Ligand | Surfactant | Water | Time | M_{n,SEC} | M_{w}/Mₙ |
| BA.8 | BA, 2.5 ml (17mmol) | EBiB, 12.8µl (0.087mmol) | CuBr, 12.5 mg (0.087mmol) | dNbpy, 71.3 mg (0.174mmol) | PEG(1000), I g | 10 ml | I hr | 9 821 | 1.12 |
| | | | | | | | 4.3 hr | 13 430 | 1.11 |
| | | | | | | | 22 hr | 19270 | 1.18 |
| BA-9 | BA, 2.5 ml (17mmol) | EBP, 11.3 µl (0.087mmol) | CuBr, 12.5 mg (0.087mmol) | dNbpy, 71.3 mg (0.174mmol) | PEG(1000), I g | 10 ml | I hr | 11480 | 1.21 |
| | | | | | | | 4.3 hr | 14 530 | 1.16 |
| | | | | | | | 22 hr | 20 260 | 1.19 |
| BA-10 | BA, 2.5 ml (17 mmol) | EBP, 11.3 µl (0.087mmol) | CuBr, 12.5 mg (0.087mmol) | dNbpy, 71.3 mg (0.174mmol) | PEG(1000), 0.5 | g 10 ml | 1 hr | 12 160 | 1.18 |
| | | | | | | | 4.3 hr | 16600 | 1.16 |
| | | | | | | | 22 hr | 22 800 | 1.17 |
| BA-11 | BA, 2.5 ml (17 mmol) | EBP, 11.3 µl (0.087mmol) | CuBr, 12.5 mg (0.087mmol) | dNbpy, 71.3 mg (0.174mmol) | PEG(4600), 1 g | 10 ml | 70 min | 15 000 | 1.27 |
| | | | | | | | 4.2 hr | 16540 | 1.21 |
| | | | | | | | 11 hr | 21 200 | 1.15 |
| | | | | | | | 22 hr | 21 750 | 1.18 |
| BMA-1 | BMA, 2.5 ml. (15.7 mmol) | EBiB, 11.5 µl (0.079mmol) | CuBr, 11.3 mg (0.079mmol) | dNbpy, 64.2 mg (0.157mmol) | PEG(4600), 1 g | 10 ml | 1 hr | 23 010 | 1.20 |
| BMA-2 | BMA, 2.5 ml (15.7 mmol) | EBiB, 11.5 µl (0.079mmol) | CuBr, 11.3 mg (0.079mmol) | dNbpy, 64.2 mg (0.157mmol) | PEG(1000), 1 g | 10 ml | 30 min | 23 250 | 1.21 |
| BMA-3 | BMA, 1.5 ml (9.4 mmol) | EBiB, 6.9 µl (0.047mmol) | CuBr, 6.8 mg (0.047mmol) | dNbpy, 38.4 mg (0.094mmol) | PEG(4600), 134 mg | 10 ml | 16 min | 17 790 | 1.21 |
| | | | | | | | 20 min | 25 460 | 1.61 |
| | | | | | | | 45min | 26030 | 1.22 |
| BMA-4 | BMA, 1.5 ml (9.4 mmol) | EBiB, 6.9 µl (0.047mmol) | CuBr, 6.8 mg (0.047mmol) | dNbpy, 38.4 mg (0.094mmol) | PEG(4600), I g | 10 ml | 20 min | 25 200 | 1.40 |
| | | | | | | | 40 min | 27 760 | 1.51 |
| | | | | | | | 70min | 28280 | 1.19 |
| BMA-5 | BMA, 3x0.5 ml (9.4 mmol) | EBiB, 3.5 µl (0.024mmol) | CuBr, 6.8 mg (0.047mmol) | dNbpy, 38.4 mg (0.094mmol) | PEG(4600), I g | 10 ml | 45 min | 40 140 | 2.09 |
| | | | | | | | 2 hr | 41 340 | 2.56 |
| | | | | | | | 3.5 hr | 55 120 | 1.81 |
| BMA-6 | BMA, 1.5 ml (9.4 mmol) | EBiB, 6.9 µl (0.047mmol) | CuBr, 6.8 mg (0.047mmol) | dNbpy, 38.4 mg (0.094mmol) | PEG(1000), 16.8 mg | 10 ml | 16 min | 21 980 | 1.25 |
| | | | | | | | 20 min | 22 940 | 1.26 |
| | | | | | | | 50min | 29 910 | 1.27 |

| | | | | | | | | | |
|---|---|---|---|---|---|---|---|---|---|
| i. All polymerizations conducted at 90°C. | | | | | | | | | |

### Example 2

**General Procedure for Table 2:** Surfactant, ligand, and transition metal were all added to a round bottom flask equipped with a magnetic stir bar, and transition metal were all added and the flask sealed with a rubber septum. The contents of the flask were degassed by applying a vacuum and back-filling with nitrogen (three times). Degassed water and monomer were then added via syringe. The mixture was stirred until all solids were dissolved. Initiator was then added and the reaction heated to the desired temperature. Samples were taken to monitor conversion (by gas chromatography) and molecular weight (by size exclusion chromatography).

### Example 3

**Reverse ATRP of Butyl Methacrylate (BMA) Using a Conventional Radical Initiator: To a 25** ml **round bottom flask with a stir bar, 11.3 mg** of CuBr₂ (0.051 mmol), 35.5 mg of dAbpy (0.093 mmol) and 0.2 g of Brij 98 (2% v. water) were added and degassed under vacuum-nitrogen cycle for three times. 1.5 ml of degassed BMA (9.4 mmol) was added to the flask via syringe. The mixture was stirred until the solution became homogeneous. 10 ml of degassed water containing 6.4 mg (0.024 mmol) of AMPA (2,2'-Azobis(2-methylpropionamidine)dihydrochloride) was then added to the flask. The mixture was stirred until an emulsified mixture was obtained. A 1 ml of sample was taken through syringe and mixed with 8 ml of THF. This sample was used as a reference for GC analysis at t=0. The flask was placed in an oil bath of 90 C. At timed intervals, 1 ml of sample was withdrawn and diluted with 8 ml of THF. Monomer conversion was measured by injecting the THF diluted sample directly into GC. The same sample was dried over MgSO₄ and purified by passing through an alumina column to remove the copper complex. After filtered through a 0.45 m syringe filter, the sample was injected into GPC for molecular weight analysis.

| Temp. (C) | Time | Conversion | M_{n,th} | M_{n,sec} | M_{w}/Mₙ |
|---|---|---|---|---|---|
| 90 | 3 hr. | 93% | 26,450 | 78,150 | 1.24 |

| | | | | | |
|---|---|---|---|---|---|
| Initiator efficiency = 0.34. | | | | | |

**Table 2. ATRP Emulsion Polymerization using Brij® as the Surfactant^{a}**

| | | | | | | | Results | | | | |
|---|---|---|---|---|---|---|---|---|---|---|---|
| Reference | Monomer | Initiator | Catalyst | Ligand | Surfactant | Water | Time | Conv(%) | M_{n,th} | M_{n,SEC} | M_{w}/M |
| BMA-7 | BMA, 1.5 ml (9.4 mmol) | EBiB, 6.9 µl (0.047mmol) | CuBr, 6.8 mg (0.047mmol) | dNbpy, 38.4 mg (0.094mmol) | Brij 97, 0.5 g | 10 ml | 25 min | 90 | 25 450 | 22 860 | 1.24 |
| | | | | | | | 40 min | 85 | 24220 | 26750 | 1.25 |
| | | | | | | | 60 min | | | 28 380 | 1.23 |
| BMA-Kinetics | ^{b}BMA, 3.0 ml (18.8 mmol) | EBiB, 19 µl (0.094mmol) | CuBr, 13.6 mg (0.094mmol) | dAbpy, 66 mg^{d} (0. 1 88mmol) | Brij 98, 0.2 g | 20 ml | 15min | 48 | 13 600 | 17 300 | 1.21 |
| | | | | | | | 30min | 54 | 15300 | 22 300 | 1.21 |
| | | | | | | | 45min | 69 | 19 600 | 24 400 | 1.21 |
| | | | | | | | 60min | 76 | 21 600 | 28200 | 1.17 |
| | | | | | | | 90min | 80 | 22 700 | 30 800 | 1.19 |
| | | | | | | | 120min | 95 | 27000 | 33300 | 1.19 |
| BMA-8 | BMA, 1.5 ml (9.4 mmol) | EBiB, 6.9 µl (0.047mmol) | CuBr, 6.8 mg (0.047mmol) | dNbpy, 38.4 mg (0.094mmol) | Brij 98, 0.5 | g 10 ml | 26 min | 70 | 19 820 | 26 240 | 1.23 |
| | | | | | | | 45 min | 83 | 23550 | 29 190 | 1.30 |
| | | | | | | | 75 min | 89 | 25 200 | 33 950 | 1.29 |
| BMA-9 | BMA, 1.5 ml (9.4 mmol) | EBiB, 6.9 µl (0.047mmol) | CuBr, 6.8 mg (0.047mmol) | dNbpy, 38.4 mg (0.094mmol) | Brij 98, 0.1 g | 10 ml | 70min | 81 | 22 890 | 22 170 | 1.26 |
| BMA-10 | BMA, 1.5 ml (9.4 mmol) | EBiB, 6.9 µl (0.047mmol) | CuBr, 6.8 mg (0.047mmol) | dNbpy, 38.4 mg (0.094mmol) | Brij 98, 0.2 g | 10 ml | 75min | 81 | 24 170 | 32 290 | 1.28 |
| BMA-11 | BMA, 1.5 ml (9.4 mmol) | EBiB, 6.9 µl (0.047mmol) | CuBr, 6.8 mg (0.047mmol) | dNbpy, 38.4 mg (0.094mmol) | Brij 98, 0.3 g | 10 ml | 12min | 48 | 13 600 | 17 800 | 1.22 |
| | | | | | | | 25min | 59 | 16 800 | 21 900 | 1.21 |
| | | | | | | | 37min | 67 | 19 100 | 24000 | 1.24 |
| | | | | | | | 50min | 74 | 21 100 | 26 500 | 1.22 |
| | | | | | | | 65min | 78 | 22 100 | 29 600 | 1.19 |
| | | | | | | | 80min | 82 | 23 400 | 30 200 | 1.22 |
| BMA-13 | BMA, 5.0 ml (31.3 mmol) | EBiB, 6.9 µl (0.047mmol) | CuBr, 6.8 mg (0.047mmol) | dNbpy, 38.4 mg (0.094mmol) | Brij 98, 0.15 g | 10ml | 130min | 67 | 62 760 | 64 950 | 1.29 |
| BMA-14 | BMA, 2.4 ml (15.1 mmol) | EBiB, 2.8 µl (0.019 mmol) | CuBr, 2.7 mg (0.019 mmol) | dNbpy, 15.4 mg (0.038 mmol) | Brij 98, 0.8 g | 16 ml | 135min | 76 | 85 890 | 98 340 | 1.73 |
| BMA-15 | BMA, 3ml (18.8 mmol) | EBiB, 13.8 µl (0.094 mmol) | CuBr, 2.7 mg (0.019 mmol) | dAbpy, 71.6 mg^{d} | none | none | 12 min | 51 | 14400 | 18000 | 1.92 |
| | | | | | | | 24 min | 63 | 18000 | 18600 | 1.62 |
| | | | | | | | 37 min | 72 | 20400 | 19000 | 1.36 |
| | | | | | | | 48 min | 74 | 21 000 | 19700 | 1.30 1.30 |
| | | | | | | | 70 min | 75 | 21 300 | 20 100 | |
| BMA-16 | BMA, 1.5 ml (9.4 mmol) | KPS, 6.2 mg (0.023 mmol) | CuBr₂, 8.6 mg (0.039 mmol) | dAbpy, 27.1 mg^{d} | Brij 98, 0.3 g | 10 ml | 20 h | No Polymer | | | |
| BMA-18 | ^{b}BMA, 20 ml | EBiB, 93 µl | CuBr, 13.6 ml | dAbpy, 66 mg^{d} | Brij 98, 0.5 g | 20 ml | 3h | | | 15800 | 1.32 |
| BMA-19 | ^{b}BMA, 3 ml | EBiB, 14 µl | CuBr, 13.6 ml | bpy, 29.4 mg (0.188 mmol) | Brij 98,1.0 g | 20 ml | 3h | 100 | 28 400 | 272 000 | 3.27 |
| BMA.20 | ^{b}BMA, 3 ml | EBiB, 14 µl | CuBr, 13.6 ml | 3N, 20 µl (0.094 mmol) | Brij 98, 1.0 g | 20 ml | 3h | 100 | 28 400 | 3 800 00 | 6.7 |
| BMA-21 | ^{b}BMA, 3 ml | EBiB, 14 µl | CuBr, 13.6 ml | Me6-TREN, 26 µl (0.094 mmol) | Brij 98, 1.0 g | 20 ml | 3h | 100 | 28 400 | 9 800 000 | 3.8 |
| BMA-29 | BMA, 1.5ml (9 4mmol) | EBiB, 6.9 µl (0.047 mmol) | CuBr, 6.8 mg (0.047 mmol) | dAbpy, 35.8 mg^{d} | DTMAB^{c} 0.5 g | 10 ml | 5 min | 31 | 8 800 | 9 200 | 1.30 |
| | | | | | | | 30 min | 51 | 14500 | 16300 | 1.26 |
| | | | | | | | 60 min | 64 | 18 200 | 21 200 | 1.24 |
| Block.1 | ^{b}BMA, 3.0 ml (18.8 mmol) | EBiB, 19 µl (0.094mmol) | CuBr, 13.6 mg (0.094mmol)' | dAbpy, 66 mg^{d} (0.188mmol) | Brij 98, 0.5 g | 20 ml | 140 min | 100 | | 34 400 | 1.25 |
| | Sty, 3.0 ml | - | - | - | Brij 98, 1.0g | 20 ml | | | | | |
| MMA | MMA, 1.5 ml (14.0 mmol) | EBiB, 9.2 µl (0.07 mmol) | CuBr, 5 mg (0.035 mmol) CuBr₂, 8 mg (0.004 mmol) | dAbpy,^{d} 26.6 mg (0.07 mmol) | Brij 98, 0.5 g | 10 ml | 3.5 | 90 | 17 300 | 23 400 | 1.36 |
| Sty-1 | Sty, 1.5 ml (13.1 mmol) | EBiB, 9.6 µl (0.066 mmol) | CuBr, 9.4 mg (0.066 mmol) | dAbpy,^{d} 49.8 mg (0.131 mmol) | Brij 98, 0.2 g | 10 ml | 7.6 h | | | 4 800 | 1.06 |
| | | | | | | | 20.5 h | | | 10 600 | 1.07 |
| Sty-2 | Sty, 1.5 ml (13.1 mmol) | EBiB, 9.6 µl (0.066 mmol) | CuBr, 9.4 mg (0.066 mmol) | dAbpy,^{d} 49.8 mg (0.131 mmol) | Tween 80, 0.3 g | 10 ml | 20.5 h | 66 | 13 750 | 12 820 | 1.06 |
| BA | BA, 1.5 ml (10.5 mmol) | EBiB, 7.7 µl (0.053 mmol) | CuBr, 7.5 mg (0.053 mmol) | dAbpy,^{d} 40.0 mg (0.105 mmol) | Brij 98, 0.2 g | 10 ml | 1.2 h | 57 | 14 500 | 10 900 | 1.19 |
| | | | | | | | 4.0 h | 78 | 20 000 | 16 100 | 1.13 |
| | | | | | | | 20.3 h | 94 | 24 200 | 20400 | 1.14 |

| | | | | | | | | | | | |
|---|---|---|---|---|---|---|---|---|---|---|---|
| a All polymerizations conducted at 90 °C, unless noted. | | | | | | | | | | | |
| b Polymerization conducted at 70 °C. | | | | | | | | | | | |
| c Dodecyltrimethylammonium bromide | | | | | | | | | | | |
| d dAbpy = 4, 4'-di(alkyl)-4, 4'-bipyridine, alkyl group is a mixture of C₅ and C₉ alkyl chains. | | | | | | | | | | | |

### Example 4

**Reverse ATRP of BA Using a Conventional Radical Initiator:** To a 25 ml round bottom flask with a stir bar, 8.9 mg of CuBr₂ (0.040 mmol), 29.9 mg of dAbpy (0.079 mmol) and 0.2 g of Brij® 98 (2% v. water) were added and degassed under vacuum-nitrogen cycle for three times. 1.5 ml of degassed BA (10.5 mmol) was added to the flask via syringe. The mixture was stirred until the solution became homogeneous. 10 ml of degassed water containing 7.3 mg (0.027 mmol) of AMPA was then added to the flask. The mixture was stirred until an emulsified mixture was obtained. A 1 ml of sample was taken through syringe and mixed with 8 ml of THF. This sample was used as a reference for GC analysis at t=0. The flask was placed in an oil bath of 90 C. At timed intervals, 1 ml of sample was withdrawn and diluted with 8 ml of THF. Monomer conversion was measured by injecting the THF diluted sample directly into GC. The same sample was dried over MgSO₄ and purified by passing through an alumina column to remove the copper complex. After filtered through a 0.45 µ syringe filter, the sample was injected into GPC for molecular weight analysis.

| Temp. (C) | Time | Conversion | M_{n,th} | M_{n,sec} | M_{w}/Mₙ |
|---|---|---|---|---|---|
| 90 | 18.75 hr. | 72% | 17,940 | 10,520 | 1.21 |

### Example 5

**Emulsion ATRP of BMA using 2-Bromoisobutyric Acid as Initiator:** To a 25 ml round bottom flask with a stir bar, 7.1 mg of CuBr (0.049 mmol), 35.2 mg of dAbpy (0.092 mmol) and 0.2 g of Brij® 98 (2% v. water) were added and degassed under vacuum-nitrogen cycle for three times. 1.5 ml of degassed BMA (9.4 mmol) was added to the flask via syringe. The mixture was stirred until the solution became homogeneous. 10 ml of degassed water containing 31.8 mg (0.19 mmol) of BIBA (2-bromoisobutyric acid) was then added to the flask. The mixture was stirred until an emulsified mixture was obtained. A I ml of sample was taken through syringe and mixed with 8 ml of THF. This sample was used as a reference for GC analysis at t=0. The flask was placed in an oil bath of 90 C. At timed intervals, 1 ml of sample was withdrawn and diluted with 8 ml of THF. Monomer conversion was measured by injecting the THF diluted sample directly into GC. The same sample was dried over MgSO₄ and purified by passing through an alumina column to remove the copper complex. After filtered through a 0.45 µ syringe filter, the sample was injected into GPC for molecular weight analysis. Initiator efficiency = 0.15.

| Temp. (C) | Time | Conversion | M_{n,th} | M_{n,sec} | M_{w}/Mₙ |
|---|---|---|---|---|---|
| 90 | 2 hr. | 75% | 5,280 | 35,480 | 1.23 |

### Example 6

**Emulsion ATRP of BMA using 2-Bromoisobutyric Acid as Initiator:** To a 25 ml Schlenk flask with a stir bar, 18.8 mg of CuBr (0.13 mmol), 99.7 mg of dAbpy (0.26 mmol) and 0.5 g of Brij® 98 (5% v. water) were added and degassed under vacuum-nitrogen cycle for three times. 1.5 ml of degassed Sty (13.1 mmol) was added to the flask via syringe. The mixture was stirred until the solution became homogeneous. 10 ml of degassed water containing 22.5 mg (0.13 mmol) of BIBA was then added to the flask. The mixture was stirred until an emulsified mixture was obtained. A 1 ml of sample was taken through syringe and mixed with 8 ml of THF. This sample was used as a reference for GC analysis at t=0. The flask was placed in an oil bath of 90 C. At timed intervals, 1 ml of sample was withdrawn and diluted with 8 ml of THF. Monomer conversion was measured by injecting the THF diluted sample directly into GC. The same sample was dried over MgSO₄ and purified by passing through an alumina column to remove the copper complex. After filtered through a 0.45 µ syringe filter, the sample was injected into GPC for molecular weight analysis. Initiator efficiency = 0.34.

| Temp. (C) | Time | Conversion | M_{n,th} | M_{n,sec} | M_{w/}Mₙ |
|---|---|---|---|---|---|
| 90 | 40.5 hr. | 82% | 8,300 | 43,460 | 1.23 |

### Example 7

**Comparison of Various Ligands:** To a round bottom flask equipped with a magnetic stir bar, surfactant, ligand, and transition metal (all with ratio water/monomer/metal/ligand/initiator = 1333/200/1/2/1) were all added and the flask sealed with a rubber septum. The contents of the flask were degassed by applying a vacuum and back-filling with nitrogen (three times). Degassed water and monomer were then added via syringe. The mixture was stirred until all solids were dissolved. Initiator was then added and the reaction heated to the desired temperature. Samples were taken to monitor conversion (by gas chromatography) and molecular weight (by size exclusion chromatography).

| Ligand | Brij® 98 | Ref. | Temp. | Time | Conv. | M_{n,th} | M_{n,sec} | M_{w}/Mₙ |
|---|---|---|---|---|---|---|---|---|
| dNbipy | 2 % | BMA-10 | 90 | 75 min | 85% | 24,170 | 32,290 | 1.28 |
| Bpy | 5% | BMA-19 | 70 | 180 min | 100% | 28,400 | 272,000 | 3.3 |
| 3N | 5% | BMA-20 | 70 | 180 min | 100% | 28,400 | 3,800,000 | 6.7 |
| TREN-Me | 5% | BMA-21 | 70 | 180 min | 100% | 28,400 | 9,800,000 | 3.8 |
| dAbpy | 2 % | BMA-22 | 90 | 100 min | 89 % | 25,310 | 37,150 | 1.33 |
| | 2 % | BMA-23 | 70 | 105 min | 88% | 25,030 | 33,980 | 1.25 |
| dTbpy | 2% | BMA-30 | 70 | 113 min | 91% | 25,880 | 32,330 | 2.03 |
| dTbpy | 2 % | BMA-31¹ | 70 | 108 min | 93% | 26,450 | 33,800 | 1.39 |

| | | | | | | | | |
|---|---|---|---|---|---|---|---|---|
| 1. with 8% of CuBr₂ (vs. Cu total) added | | | | | | | | |

### Example 8

**Comparison of Monomer to Water Ratio:** To a round bottom flask equipped with a magnetic stir bar, surfactant (wt % relative to water), ligand, and transition metal (all with ratio monomer/metal/ligand/initiator = 200/1/2/1, except BMA-15: 600/1/2/1) were all added and the flask sealed with a rubber septum. The contents of the flask were degassed by applying a vacuum and back-filling with nitrogen (three times). Degassed water and monomer were then added via syringe. The mixture was stirred until all solids were dissolved. Initiator was then added and the reaction heated to the desired temperature. Samples were taken to monitor conversion (by gas chromatography) and molecular weight (by size exclusion chromatography).

**Monomer/water ratio (volume)**

| | Brij® 98 | Ref. | Temp. | Time | Conv. | M_{n,th} | M_{n,sec} | M_{w}/Mₙ |
|---|---|---|---|---|---|---|---|---|
| 0.15/1 | 2 % | BMA-23 | 70 | 105 min | 88% | 25,030 | 33,980 | 1.25 |
| 2 / 1 | 1.5% | BMA-13 | 90 | 130 min | 66 % | 62,760 | 64,950 | 1.29 |
| 1/1 | 5% | BMA-49 | 70 | 125 min | 83% | 23,610 | 29,820 | 1.16 |
| 7/3 | 23% | --- | 70 | 19.5 h | 41% | 11,600 | 30,200 | 1.8 |

### Example 9

**Comparison of Surfactant to Water Ratio**: To a round bottom flask equipped with a magnetic stir bar, surfactant (wt % relative to water), ligand, and transition metal (all with ratio water/monomer/metal/ligand/initiator = 1333/200/1/2/1) were all added and the flask sealed with a rubber septum. The contents of the flask were degassed by applying a vacuum and back-filling with nitrogen (three times). Degassed water and monomer were then added via syringe. The mixture was stirred until all solids were dissolved. Initiator was then added and the reaction heated to the desired temperature. Samples were taken to monitor conversion (by gas chromatography) and molecular weight (by size exclusion chromatography).

**Surfactant / water ratio (weight)**

| Surfactant | wt ratio | Ref. | Temp. | Time | Conv. | M_{n,th} | M_{n,sec} | M_{w}/Mₙ |
|---|---|---|---|---|---|---|---|---|
| Brij® 98 | 5% | BMA-8 | 90 | 75 min | 89% | 25,200 | 33,950 | 1.29 |
| | 3% | BMA-11 | 90 | 80 min | 82 % | 23,430 | 30,200 | 1.22 |
| | 2 % | BMA-10 | 90 | 75 min | 85% | 24,170 | 32,290 | 1.28 |
| | 1% | BMA-9 | 90 | 70 min | 81% | 22,890 | 28,170 | 1.26 |
| | 0.2 % | BMA-37 | 70 | 123 min | 85% | 24,170 | 33,860 | 1.30 |

### Example 10

**Polymerization at Various Temperatures:** To a round bottom flask equipped with a magnetic stir bar, surfactant (wt % relative to water), ligand, and transition metal (all with ratio water/monomer/metal/ligand/initiator = 1333/200/1/2/1) were all added and the flask sealed with a rubber septum. The contents of the flask were degassed by applying a vacuum and back-filling with nitrogen (three times). Degassed water and monomer were then added via syringe. The mixture was stirred until all solids were dissolved. Initiator was then added and the reaction heated to the desired temperature. Samples were taken to monitor conversion (by gas chromatography) and molecular weight (by size exclusion chromatography).

**Temperature**

| Temp.( C)Surfactant | | Ref. | Time | Conv. | M_{n,th} | M_{n,sec} | M_{w}/ Mₙ |
|---|---|---|---|---|---|---|---|
| 90 | 2 % | BMA-10 | 75 min | 85 % | 24,170 | 32,290 | 1.28 |
| 70 | 2 % | BMA-23 | 105 min | 88 % | 25,030 | 33,980 | 1.25 |
| 50 | 2 % | BMA-33 | 200 min | 78 % | 22,180 | 35,430 | 1.25 |
| 22 | 1 % | BMA-18 | 7.2 hr | 95 % | 27,100 | 33,710 | 1.18 |

### Example 11

**Polymerization with Added Deactivator**: To a round bottom flask equipped with a magnetic stir bar, surfactant (2 wt% relative to water), ligand, and transition metal (all with ratio water/monomer/metal/ligand/initiator = 1333/200/1/2/1) were all added and the flask sealed with a rubber septum. The contents of the flask were degassed by applying a vacuum and back-filling with nitrogen (three times). Degassed water and monomer were then added via syringe. The mixture was stirred until all solids were dissolved. Initiator was then added and the reaction heated to the desired temperature. Samples were taken to monitor conversion (by gas chromatography) and molecular weight (by size exclusion chromatography).

**Withlwithout external CuBr₂ added**

| CuBr₂(% vs. Cuₜₒₜₐₗ) | Ref. | Temp. | Time | Conv. | M_{n,th} | M_{n,sec} | M_{w}/M ₙ |
|---|---|---|---|---|---|---|---|
| 0% | BMA-33 | 50 | 200 min | 78% | 22,180 | 35,430 | 1.25 |
| 13% | BMA-34 | 50 | 200 min | 77% | 21,900 | 29,720 | 1.17 |

### Example 12

**Comparison of Order of Initiator Addition:** Surfactant (wt % relative to water), ligand, and transition metal (all with ratio water/monomer/metal/ligand/initiator = 1333/200/1/2/1) were all added to a round bottom flask equipped with a magnetic stir bar, and the flask sealed with a rubber septum. The contents of the flask were degassed by applying a vacuum and back-filling with nitrogen (three times). Degassed water and monomer were then added via syringe. The mixture was stirred until all solids were dissolved. Initiator was added either at the same time as the monomer (First) or after the reaction was stirred to give an emulsified mixture (Last). The reaction was heated to 70 °C Samples were taken to monitor conversion (by gas chromatography) and molecular weight (by size exclusion chromatography).

**Method of initiator addition (EBiB)**

| EBiB | Brij® 98 | Ref. | Temp. | Time | Conv. | M_{n,th} | M_{n,sec} | M_{w} / M ₙ |
|---|---|---|---|---|---|---|---|---|
| First | 2 % | BMA-21¹ | 70 | 100 min | 76 % | 21,610 | 34,120 | 1.25 |
| Last | 2 % | BMA-23² | 70 | 105 min | 88 % | 25,030 | 33,980 | 1.25 |

| | | | | | | | | |
|---|---|---|---|---|---|---|---|---|
| 1 a lot of coagulation. | | | | | | | | |
| 2 no coagulation, stable emulsion | | | | | | | | |

### Example 13

**Statistical copolymerization of n-butyl acrylate and methyl methacrylate**: A dry Schlenk flask with magnetic stirring bead was charged with CuBr (6.7 mg; 0.047 mmol), 4, 4 - di(alkyl) - 2,2 - bipyridine (40 mg; 0.105 mmol), Brij® 98 (0.3 g) and cycled between vacuum and nitrogen three times. Degassed methyl methacrylate (0.63 ml, 5.9 mmol), n-butyl acrylate (0.87 ml, 6.1 mmol), water (10 ml) and hexadecane (0.1 ml) were added to the flask using degassed syringes and stainless steel needles. The flask was placed in an oil bath held by a thermostat at 90°C and the solution stirred vigorously until an emulsion was formed. Ethyl 2-bromoisobutyrate (6.9 µl, 0.047 mmol) was injected quickly under a nitrogen atmosphere. At various times samples were taken via syringe to monitor conversion (GC) and molecular weight (SEC).

| **Time (hr)** | **MMA Conv. (%)** | **BA Conv. (%)** | **M**_{**n**} **(theo.)** | **M**_{**n**} **(SEC)** | **M**_{**w**}**/M**_{**n**} |
|---|---|---|---|---|---|
| 0.5 | 29.4 | 0.5 | 3750 | 9300 | 1.20 |
| 1 | 46.2 | 19.7 | 7010 | 11100 | 1.22 |
| 1.5 | 55.4 | 23.8 | 10870 | 12280 | 1.22 |
| 3 | 64.6 | 24.7 | 12170 | 15340 | 1.21 |
| 5.5 | 77.8 | 38.7 | 16140 | 18290 | 1.20 |
| 10 | 89.6 | 53.7 | 20100 | 21560 | 1.19 |
| 24 | 100 | 66.9 | 23580 | 24130 | 1.21 |
| 48 | 100 | 80.0 | 25750 | 26840 | 1.22 |

### Example 13

**Statistical copolymerization of n-butyl methacrylate and methyl methacrylate:** A dry Schlenk flask with magnetic stirring bead was charged with CuBr (6.8 mg; 0.047 mmol), 4, 4 - di(alkyl) - 2,2 - bipyridine (40 mg; 0.105 mmol), Brij® 98(0.3 g) and cycled between vacuum and nitrogen three times. Degassed methyl methacrylate (0.5 ml, 4.7 mmol), n-butyl methacrylate (0.75 ml, 4.7 mmol), water (10 ml) and hexadecane (0.1 ml) were added to the flask using degassed syringes and stainless steel needles. The flask was placed in an oil bath held by a thermostat at 70°C and the solution stirred vigorously until an emulsion was formed. Ethyl 2-bromoisobutyrate (6.9 µl, 0.047 mmol) was injected quickly under a nitrogen atmosphere. At various times samples were taken via syringe to monitor conversion (GC) and molecular weight (SEC).

| **Time (hr)** | **MMA Conv. (%)** | **BMA Con.(%)** | **M**_{**n**} **(theo.)** | **M**_{**n**} **(SEC)** | **M**_{**w**}**/M**_{**n**} |
|---|---|---|---|---|---|
| 0.5 | 41.1 | 43.4 | 10270 | 17280 | 1.22 |
| 1 | 55.6 | 67.1 | 15090 | 22240 | 1.23 |
| 1.5 | 66.5 | 75.6 | 17390 | 25930 | 1.24 |
| 2.5 | 85.8 | 92.0 | 21640 | 29680 | 1.25 |
| 5 | 93.0 | 100 | 23500 | 33550 | 1.25 |

### Example 14

**Chain Extension of n-butyl methacrylate**: A dry Schlenk flask with magnetic stirring bead was charged with CuCl (4.7 mg; 0.047 mmol), 4, 4 - di(alkyl) - 2,2 - bipyridine (40 mg; 0.105 mmol), Brij® 98(0.3 g) and cycled between vacuum and nitrogen three times. Degassed n-butyl methacrylate (1.5 ml, 9.4 mmol), water (10 ml) and hexadecane (0.1 ml) were added to the flask using degassed syringes and stainless steel needles. The flask was placed in an oil bath held by a thermostat at 70°C and the solution stirred vigorously until an emulsion was formed. Ethyl 2-bromoisobutyrate (6.9 µl, 0.047 mmol) was injected quickly under a nitrogen atmosphere. After 2.5 hours, a second oxygen-free emulsion of n-butyl methacrylate (3.0 ml, 18.8 mmol), water (10 ml) and Brij® 98(0.3 g) was cannulated into the Schlenk flask. At various times samples were taken via syringe to monitor conversion (GC) and molecular weight (SEC).

| **Time (hr)** | **BMA Conversion (%)**^{**a**} | **M**_{**n**} **(theo.)** | **M**_{**n**} **(SEC)** | **M**_{**w**}**/M**_{**n**} |
|---|---|---|---|---|
| 2.5^{b} | 75 | 21440 | 30220 | 1.33 |
| 2.5^{c} | 76 | 21580 | 30960 | 1.45 |
| 5.5 | 151 | 64480 | 76910 | 1.48 |
| 19 | 300 | 85200 | 105100 | 1.45 |

| | | | | |
|---|---|---|---|---|
| ^{a} Relative to percent conversion of first monomer feed. | | | | |
| ^{b} Before second monomer addition. | | | | |
| ^{c} After second monomer addition. | | | | |

### Example 15

**Block copolymerization of n-butyl methacrylate and methyl methacrylate by sequential addition**: A dry Schlenk flask with magnetic stirring bead was charged with CuBr (6.9 mg; 0.047 mmol), 4, 4 - di(alkyl) - 2,2 - bipyridine (40 mg; 0.105 mmol), Brij® 98(0.3 g) and cycled between vacuum and nitrogen three times. Degassed n-butyl methacrylate (1.5 ml, 9.4 mmol), water (10 ml) and hexadecane (0.1 ml) were added to the flask using degassed syringes and stainless steel needles. The flask was placed in an oil bath held by a thermostat at 70°C and the solution stirred vigorously until an emulsion was formed. Ethyl 2-bromoisobutyrate (6.9 µl, 0.047 mmol) was injected quickly under a nitrogen atmosphere. After 2 hours, a second oxygen-free emulsion of methyl methacrylate (2.0 ml, 18.7 mmol), water (10 ml) and Brij® 98(0.3 g) was cannulated into the Schlenk flask. At various times samples were taken via syringe to monitor conversion (GC) and molecular weight (SEC).

| **Time (hr)** | **BMA Conv.(%)** | **MMA Conv.(%)** | **M**_{**n**} **(theo.)** | **M**_{**n**} **(SEC)** | **M**_{**w**}**/M**_{**D**} |
|---|---|---|---|---|---|
| 2^{a} | 80 | | 22720 | 30010 | 1.23 |
| 2.1^{b} | 77 | 0 | 21870 | 31000 | 1.23 |
| 4 | 90 | 43 | 42760 | 61330 | 1.41 |
| 22 | 94 | 55 | 48700 | 77290 | 1.62 |

| | | | | | |
|---|---|---|---|---|---|
| ^{a} Before second monomer addition. | | | | | |
| ^{b} After second monomer addition. | | | | | |

### Example 16

**Block copolymerization of methyl methacrylate and methyl acrylate using pre-made macroinitiator:** A dry Schlenk flask with magnetic stirring bead was charged with CuBr (3.6 mg; 0.025 mmol), 4, 4 - di(alkyl) - 2,2 - bipyridine (20 mg; 0.05 mmol), Brij® 98(0.3 g) and cycled between vacuum and nitrogen three times. Degassed methyl acrylate (0.22 ml, 2.4 mmol), water (5 ml) and hexadecane (0.1 ml) were added to the flask using degassed syringes and stainless steel needles. The flask was placed in an oil bath held by a thermostat at 70°C and the solution stirred vigorously until an emulsion was formed. A round bottom flask containing a magnetic stirring bead was charged with poly(methyl methacrylate) which was terminated with a Cl atom (0.3 g; 0.025 mmol; Mₙ = 12000; PD = 1.13), Brij® 98(0.3 g) and cycled between vacuum and nitrogen three times. Degassed methyl acrylate (0.6 ml, 6.7 mmol) was added to the round bottom flask and the poly(methyl methacrylate) allowed to dissolve, then degassed water (5 ml) and toluene (0.5 ml) were also added to the round bottom flask using degassed syringes and stainless steel needles. The contents of the round bottom flask were stirred vigorously until an emulsion formed, and then the emulsion was cannulated into the Schlenk flask, which was placed in an oil bath held by a thermostat at 90°C. At various times samples were taken via syringe to monitor conversion (GC) and molecular weight (SEC). After 16 hours, monomer conversion was 67%, Mₙ = 21,700 and PD = 1.27 (SEC).

### Example 17

**Comparison of Various Surfactants:** To a round bottom flask equipped with a magnetic stir bar, surfactant, ligand, and transition metal (all with ratio water/monomer/metal/ligand/initiator = 1333/200/1/2/1) were all added and the flask sealed with a rubber septum. The contents of the flask were degassed by applying a vacuum and back-filling with nitrogen (three times). Degassed water and monomer were then added via syringe. The mixture was stirred until all solids were dissolved. Initiator was then added and the reaction heated to 70 °C. Samples were taken to monitor conversion (by gas chromatography) and molecular weight (by size exclusion chromatography).

| Reference | Surfactant (wt%) | Monomer | Time (h) | Conv.(%) | Mₙ,sec | M_{w}/Mₙ | Latex Stability^{a} |
|---|---|---|---|---|---|---|---|
| BMA-2 | PEG 1000 (10) | BMA | 1 | n/a | 24000 | 1.21 | Unstable |
| BMA-1 | PEG 4600 (10) | BMA | 1 | n/a | 23 000 | 1.20 | Unstable |
| BMA-7 | Brij® 97 (5) | BMA | 0.67 | 85 | 26 800 | 1.25 | Unstable |
| BMA-9 | Brij® 98 (1) | BMA | 1.17 | 81 | 28200 | 1.26 | Stable |
| BA-12 | Brij® 98 (2) | BA | 20.3 | 94 | 20 400 | 1.14 | Stable |
| Sty-1 | Brij® 98 (2) | Sty | 20.3 | 90 | 10 600 | 1.07 | Stable |
| MMA-3 | Brij® 98 (5) | MMA | 1.3 | 69 | 18 600 | 1.15 | Stable |
| BMA-26 | Tween® 20 (2) | BMA | 2 | 90 | 35 200 | 1.22 | Stable |
| BMA-27 | Tween® 80 (2) | BMA | 2 | 86 | 34 600 | 1.23 | Stable |
| BA-15 | Tween® 80 (2) | BA | 20 | 72 | 17600 | 1.13 | Stable |
| Sty-3 | Tween® 80 (3) | Sty | 20.5 | 66 | 12800 | 1.06 | Stable |
| BMA-29 | DTMAB (5) | BMA | 1 | 64 | 21200 | 1.24 | Stable |

| | | | | | | | |
|---|---|---|---|---|---|---|---|
| a Indicates whether a latex (stable) was obtained at the end of the polymerization or if coagulation/flocculation was observed (unstable). | | | | | | | |

### Example 18

**Use of a non-conjugated ligand for emulsion:** To a 25 ml Schlenk flask charged with 7.5 mg (0.052 mmol) of CuBr, 16.3 mg (0.052 mmol) of BPMOA (bis(2-pyridylmethyl) octylamine) and 0.2 g of Brij 98 under a N₂ atmosphere, 1.5 ml of degassed BA (10.5 mmol) and 10 ml of degassed deionized water were added. The mixture was stirred to form an emulsified mixture. The flask was placed in an oil bath at 70 C, and 7.7 ul of EBiB was added via syringe. The magnetic stirring rate was 1100 rpm. After 8.25 h, 81 % conv., Mₙ=31,850 (1.64), M_{n,th}=20,740,

### Example 19

**Use of potassium persulfate in a Reverse ATRP emulsion polymerization:** 7.8 mg (0.035 mmol) of CuBr2, 27.6 mg (0.072 mmol) of dAbipy and 0.2 g of Brij 98 were added to a round bottom flask with a stir bar. After degassed under vacuum/N₂ cycle for 3 times, the flask was charged of 1.5 ml (9.4 mmol) of degassed BMA. The mixture was stirred well until a homogeneous solution was obtained. 6.7 mg (0.025 mmol) of potassium persulfate (DPₙ = 200) in 10 ml of buffer solution (Fisher, KH₂PO₄/NaOH, pH=7) was dissolved and added to the flask with the monomer solution, which was then placed in an oil bath at 70 C. The magnetic stirring rate was 1100 rpm. 5 h, 72 % conv., Mₙ,= 53,100 (1.36), M_{n,th}=20,480, Initiator efficiency = 0.39. In a similar procedure, a DPₙ=100 experiment was done. After 4 h, conv.= 44%, Mₙ=20,700 (1.10), M_{n,th}=6,260. Initiator efficiency = 0.30.

### Example 20

**Chain Extension of n-butyl acrylate:** A dry Schlenk flask with magnetic stirring bead was charged with CuBr (7.6 mg; 0.053 mmol), 4,4-di(alkyl)-2,2-bipyridine(40 mg; 0.105 mmol), Brij98 (0.2 g) and cycled between vacuum and nitrogen three times. Degassed n-butyl acrylate (1.5 ml, 10.5 mmol), water (10 ml) and hexadecane (0.1 ml) were added to the flask using degassed syringes and stainless steel needles. The flask was placed in an oil bath held by a thermostat at 90°C and the solution stirred vigorously until an emulsion was formed. Ethyl 2-bromoisobutyrate (7.7 µl, 0.052 mmol) was injected quickly under a nitrogen atmosphere. After 29 hours, a second oxygen-free emulsion of n-butyl acrylate (3.0 ml, 21.0 mmol), water (10 ml) and Brij98 (0.4 g) was cannulated into the Schlenk flask. At various times samples were taken via syringe to monitor conversion (GC) and molecular weight (SEC).

| Time (hr) | Conv. (%)^{m} | Mₙ (theo.) | Mₙ (SEC) | M_{w}/Mₙ |
|---|---|---|---|---|
| 0 | 0 | 0 | | |
| 1 | 29 | 7480 | 9140 | 1.30 |
| 2 | 36 | 9270 | 10410 | 1.27 |
| 4 | 46 | 11830 | 13200 | 1.20 |
| 9 | 58 | 14820 | 16450 | 1.15 |
| 18 | 69 | 17640 | 19460 | 1.13 |
| 29^{b} | 78 | 19970 | 21250 | 1.14 |
| 29^{c} | 79 | 19970 | 22210 | 1.11 |
| 45 | 136 | 34750 | 34680 | 1.22 |
| 53 | 140 | 35660 | 38310 | 1.25 |
| 66 | 165 | 42250 | 44750 | 1.27 |

| | | | | |
|---|---|---|---|---|
| ^{a} Relative to percent conversion of first monomer feed. | | | | |
| ^{b} Before second monomer addition, | | | | |
| ^{c} After second monomer addition. | | | | |

### Example 21

**Water-borne ATRP of n-BMA using Cu(I)Br/dAbipy, 2-hydroxyethyl-2-bromoisobutyrate.** To a 25 ml round bottle flask with a magnetic stir bar was charged Brij 98 surfactant (0.2 g), 4,4-dialkyl bipyridine (0.035g, 0.094 mmol), copper(I) bromide (0.0068 g, 0.047 mmol), and hexadecane (internal standard, 0.2 ml). The reaction flask was fitted with a rubber septa, evacuated and back-filled with argon (3x). Degassed n-butyl methacrylate (1.5 ml, 9.4 mmol) and De-ionized water (10 ml) were then added. Agitation of the flask was conducted until all of the surfactant was dissolved, and a red-brown emulsion was obtained. The initiator, 2-hydroxyethyl-2-bromoisobutyrate (5.5 µL, 0.047 mmol) was then injected into the flask. The reaction flask was then placed in an oil bath at 70°C for 1.75 hrs. Conv. = 57% (from GC) Mₙ = 33,750; M_{w}/Mₙ = 1.30 (from GPC against PS).

### Example 22

**Water-borne Reverse ATRP using Cu(II)Br**_{**2**}**/dAbipy, 2,2-azobis(2-amidopropane)dihydrogen chloride.** To a 500 ml three-neck flask was charged Brij 98 surfactant (2.0 g), dAbipy (0.258 g, 0.68 mmol), copper(II) bromide (0.08 g, 0.34 mmol), and hexadecane (internal standard, 0.2 ml). The reaction flask was then evacuated and back-filled with argon (3x). Degassed n-butyl methacrylate (1.5 ml, 0.094 mol) and allowed to stir till all of the Cu(II)Br₂ was in solution. De-ionized water (100 ml) was then also added. Agitation of the flask was conducted using a mechanical stirrer until all of the surfactant was dissolved, and a light-green emulsion was obtained. The initiator, 2,2-azobis(2-amidopropane)dihydrogen chloride (AMPA) (0.064 g, 0.23 mmol), dissolved in 5 ml of degassed water was then injected into the reaction flask and the temperature was set at 90°C. Conversion was monitored by GC (p = 99%) and the final polymer was analyzed by GPC, Mₙ = 24,780; M_{w}/Mₙ= 1.36

### Example 23

**Water-borne ATRP of n-BMA using Cu(II)Br**_{**2**}**/dAbipy, Cu(0) turnings**. To a 25 ml round bottle flask with a magnetic stir bar was charged Brij 98 surfactant (0.2 g), 4,4-dialkyl bipyridine (0.035g, 0.094 mmol), copper(II) bromide (0.010 g, 0.047 mmol), copper(0) powder (0.0029 g, 0.047 mmol) and hexadecane (internal standard, 0.2 MI). The reaction flask was fitted with a rubber septa and then evacuated and back-filled with argon (3x). Degassed n-butyl methacrylate (1.5 ml, 9.4 mmol) and the reaction solution was allowed to stir for several hours, resulting in a deep red solution. The red solution was then transferred to a degassed 25 ml Schlenk flask which contained Brij 98 (0.20 g) and hexadecane (0.40 ml). De-ionized water (10 ml) was then added to the Schlenk flask. Agitation of the flask was conducted until all of the surfactant was dissolved, and a red-brown emulsion was obtained. Ethyl 2-bromoisobutyrate (6.9 µL, 0.047 mmol) was then injected into the flask. The reaction flask was then placed in an oil bath at 70°C for 18 hrs. Conversion was monitored by GC (p = 0.89) and the final polymer analyzed by GPC (Mₙ = 14,070; M_{w}/Mₙ = 1.14)

### Example 24

**Water-borne ATRP of n-BMA using Cu(II(CF**_{**3**}**SO**_{**3**}**)dAbipy, Cu(0) powder.** To a 25 ml round bottle flask with a magnetic stir bar was charged Brij 99 surfactant (0.2 g), 4,4-dialkyl bipyridine (0.035g, 0.094 mmol), Cu(II)(CF₃SO₃)₂/(0.0169 g, 0.047 mmol), copper(0) powder (0.0029 g, 0.047 mmol) and hexadecane (internal standard, 0.2 MI). The reaction flask was fitted with a rubber septa and then evacuated and back-filled with argon (3x). Degassed n-butyl methacrylate (1.5 Ml, 9.4 mmol) and the reaction solution was allowed to stir for several hours, resulting in a deep red solution. De-ionized water (10 ml) was then added. Agitation of the flask was conducted until all of the surfactant was dissolved, and a red-brown emulsion was obtained. Ethyl 2-bromoisobutyrate (6.9 µL, 0.047 mmol) was then injected into the flask. The reaction flask was then placed in an oil bath at 70°C for 18 hrs. Mₙ = 29,300 M_{w/}Mₙ = 1.15

This application is based on U.S. Provisional application 60/079,805, filed March 30, 1998 in the U.S. Patent Office.

## Claims

1. A process for the preparation of a (co)polymer emulsions or suspension prepared by controlled/"living" free radical polymerization comprising the steps of:
polymerizing one or more radically (co)polymerizable monomers in the presence of a system initially comprising:
(a) a suspending medium,
(b) a surfactant,
(c) an initiator having one or more radically transferable atoms or groups,
(d) a catalyst system comprising:
(i) a transition metal compound capable of participating in a redox cycle with the initiator and,
(ii) one or more N-, 0-, P or S- containing ligands which coordinate in a σ-bond or in a π-bond to the transition metal, any C containing compound which can coordinate in a π-bond to the transition metal, or any carbon containing ligand which coordinates in a carbon-transition metal σ-bond but which does not form a carbon-carbon bond with said monomer under the polymerization conditions, wherein said catalyst system, in both oxidation states, is at least partially soluble in the monomer/polymer phase generated during said polymerizing,
to form a (co)polymer emulsion or suspension.

2. The process of claim 1, further comprising isolating said (co)polymer.

3. The process of claim 1, wherein the suspending medium is an inorganic liquid.

4. The process of claim 3, wherein the suspending medium is water.

5. The process of claim 4, wherein the ratio of organic phase to water is between 1:100 and 100:1.

6. The process of claim 4, wherein the ratio of organic phase to water is between 1:10 and 10:1.

7. The process of claim 1, wherein the suspending medium is buffered.

8. The process of claim 1, wherein the surfactant is a non-ionic surfactant.

9. The process of claim 1, wherein the surfactant is an ionic surfactant.

10. The process of claim 9, wherein the surfactant is a cationic surfactant.

11. The process of claim 1, wherein the surfactant is present in a concentration of 0.0 1% to 50%.

12. The process of claim 1, wherein the surfactant controls the stability of the emulsion.

13. The process of claims 12, wherein the surfactant forms a stable emulsion.

14. The process of claim 2, wherein the surfactant allows coagulation of the (co)polymer after polymerization of the (co)monomers to allow isolation of the (co)polymer.

15. The process of claim 1, wherein the role of surfactant and initiator is combined in a single surfactant/initiator molecule.

16. The process of claim 15, wherein the surfactant/initiator is a macromolecule.

17. The process of claim 16, wherein the macromolecule is prepared in situ.

18. The process of claim 16, wherein the macromolecule is at least partially soluble in one or more phases of the emulsion.

19. The process of claim 18, wherein the macromolecule is at least partially soluble in all phases of the emulsion.

20. The process of claim 1, wherein the initiator is prepared in situ.

21. The process of claim 1, wherein the initiator is soluble in the organic phase.

22. The process of claim 1, wherein the initiator is soluble in the suspending medium.

23. The process of claim 1, wherein the initiator is a macroinititiator.

24. The process of claim 23, wherein the macroinitiator is prepared in situ.

25. The process of claim 23, wherein the macroinitiator is at least partially soluble in one or more phases of the emulsion.

26. The process of claim 25, wherein the macroinitiator is at least partially soluble in all phases of the emulsion.

27. The process of claim 1, wherein the initiator is the last component added to the initial reaction medium.

28. The process of claim 1, wherein the catalyst is formed in situ by reduction of a higher oxidation state metal.

29. The process of claim 1, wherein one or more monomers may be added continuously, periodically or sequentially to the polymerization to prepare emulsions or suspensions of statistical, gradient or block copolymers.

30. The process of claim 29, wherein the one or more monomers are added in bulk or as a second emulsion.

31. The process of claim 1, further comprising contacting the emulsion with a material that selectively absorbs the transition metal catalyst.

32. The process of claim 31, wherein said material that selectively absorbs the transition metal catalyst is an ion exchange resin.

33. The process of claim 31, further comprising isolating the (co)polymer to provide a catalyst free (co)polymer.

34. The process of claim 1, wherein the suspending medium is an organic medium and the one or more radically (co)polymerizable monomers are dissolved in an inorganic solvent.

35. A (co)polymer emulsion or suspension prepared by the process of claim 1, wherein the (co)polymer contained therein exhibits one or more characteristics selected from the group consisting of predefined molecular weight, narrow molecular weight distribution, well-defined end groups, controlled composition, and controlled architecture.

36. The (co)polymer emulsion or suspension as claimed in claim 35, wherein the (co)polymer contained therein is sufficiently stable to not significantly change its properties after being held at 150°C for several hours.

37. The (co)polymer emulsion or suspension as claimed in claim 35, wherein the (co)polymer has a molecular weight distribution (Mw/Mn) of <1.5 and known end groups.

## Patentansprüche

1. Ein Verfahren zur Herstellung einer (Co)polymeremulsion oder -suspension, die hergestellt wird durch eine kontrolliert/"lebende" Polymerisation mit freien Radikalen, welches die folgenden Schritte umfasst:
Polymerisieren von einem oder mehreren radikalisch (co)polymerisierbaren Monomeren in der Gegenwart eines Systems, das anfänglich Folgendes umfasst:
(a) ein Suspensionsmedium,
(b) ein Tensid,
(c) einen Initiator mit einem/einer oder mehreren radikalisch übertragbaren Atome(n) oder Gruppe(n),
(d) ein Katalysatorsystem, das Folgendes umfasst:
(i) eine Übergangsmetallverbindung, die in der Lage ist, an einem Redoxzyklus mit dem Initiator teilzunehmen, und
(ii) einen oder mehrere N-, O-, P- oder S-haltige Liganden, welche mit einer σ-Bindung oder einer π-Bindung mit dem Übergangsmetall koordiniert sind, irgendeine C-haltige Verbindung, die mit einer π-Bindung mit dem Übergangsmetall koordinieren kann, oder irgendeinen kohlenstoffhaltigen Liganden, der mit einer Kohlenstoff-Übergangsmetall-σ-Bindung koordiniert, welcher jedoch keine Kohlenstoff-Kohlenstoff-Bindung mit dem Monomer unter den Polymerisationsbedingungen ausbildet,
wobei das Katalysatorsystem in beiden Oxidationszuständen zumindest teilweise in der während dem Polymerisieren gebildeten Monomer/Polymer-Phase löslich ist,
um eine (Co)polymeremulsion oder -suspension auszubilden.

2. Das Verfahren nach Anspruch 1, welches ferner ein Isolieren des (Co)polymers umfasst.

3. Das Verfahren nach Anspruch 1, wobei das Suspensionsmedium eine anorganische Flüssigkeit ist.

4. Das Verfahren nach Anspruch 3, wobei das Suspensionsmedium Wasser ist.

5. Das Verfahren nach Anspruch 4, wobei das Verhältnis von organischer Phase zu Wasser zwischen 1:100 und 100:1 1 liegt.

6. Das Verfahren nach Anspruch 4, wobei das Verhältnis von organischer Phase zu Wasser zwischen 1:10 und 10:1 liegt.

7. Das Verfahren nach Anspruch 1, wobei das Suspensionsmedium gepuffert ist.

8. Das Verfahren nach Anspruch 1, wobei das Tensid ein nichtionisches Tensid ist.

9. Das Verfahren nach Anspruch 1, wobei das Tensid ein ionisches Tensid ist.

10. Das Verfahren nach Anspruch 9, wobei das Tensid ein kationisches Tensid ist.

11. Das Verfahren nach Anspruch 1, wobei das Tensid in einer Konzentration von 0,01 % bis 50 % vorhanden ist.

12. Das Verfahren nach Anspruch 1, wobei das Tensid die Stabilität der Emulsion steuert.

13. Das Verfahren nach Anspruch 12, wobei das Tensid eine stabile Emulsion bildet.

14. Das Verfahren nach Anspruch 2, wobei das Tensid eine Koagulation des (Co)polymers nach einer Polymerisation der (Co)monomere ermöglicht, um eine Isolierung des (Co)polymers zu ermöglichen.

15. Das Verfahren nach Anspruch 1, wobei die Rolle des Tensids und des Initiators in einem einzelnen Tensid/Initiator-Molekül vereinigt ist.

16. Das Verfahren nach Anspruch 15, wobei das Tensid/der Initiator ein Makromolekül ist.

17. Das Verfahren nach Anspruch 16, wobei das Makromolekül in situ hergestellt wird.

18. Das Verfahren nach Anspruch 16, wobei das Makromolekül zumindest teilweise in einer oder mehreren Phasen der Emulsion löslich ist.

19. Das Verfahren nach Anspruch 18, wobei das Makromolekül zumindest teilweise in allen Phasen der Emulsion löslich ist.

20. Das Verfahren nach Anspruch 1, wobei der Initiator in situ hergestellt wird.

21. Das Verfahren nach Anspruch 1, wobei der Initiator in der organischen Phase löslich ist.

22. Das Verfahren nach Anspruch 1, wobei der Initiator in dem Suspensionsmedium löslich ist.

23. Das Verfahren nach Anspruch 1, wobei der Initiator ein Makroinitiator ist.

24. Das Verfahren nach Anspruch 23, wobei der Makroinitiator in situ hergestellt wird.

25. Das Verfahren nach Anspruch 23, wobei der Makroinitiator zumindest teilweise in einer oder mehreren Phasen der Emulsion löslich ist.

26. Das Verfahren nach Anspruch 25, wobei der Makroinitiator zumindest teilweise in allen Phasen der Emulsion löslich ist.

27. Das Verfahren nach Anspruch 1, wobei der Initiator die letzte Komponente ist, die zu dem anfänglichen Reaktionsmedium gegeben wird.

28. Das Verfahren nach Anspruch 1, wobei der Katalysator in situ durch Reduktion eines Metalls mit höherem Oxidationszustand gebildet wird.

29. Das Verfahren nach Anspruch 1, wobei ein oder mehrere Monomere kontinuierlich, periodisch oder sequenziell zu der Polymerisation gegeben werden können, um Emulsionen oder Suspensionen von statistischen Copolymeren, Gradientencopolymeren oder Blockcopolymeren herzustellen.

30. Das Verfahren nach Anspruch 29, wobei das eine oder die mehreren Monomere in Masse oder als eine zweite Emulsion zugegeben werden.

31. Das Verfahren nach Anspruch 1, welches ferner das In-Kontakt-Bringen der Emulsion mit einem Material, das selektiv den Übergangsmetallkatalysator absorbiert, umfasst.

32. Das Verfahren nach Anspruch 31, wobei das Material, das selektiv den Übergangsmetallkatalysator absorbiert, ein lonenaustauscherharz ist.

33. Das Verfahren nach Anspruch 31, welches ferner ein Isolieren des (Co)polymers umfasst, um ein katalysatorfreies (Co)polymer zur Verfügung zu stellen.

34. Das Verfahren nach Anspruch 1, wobei das Suspensionsmedium ein organisches Medium ist und das eine oder die mehreren radikalisch (co)polymerisierbaren Monomere in einem anorganischen Lösungsmittel gelöst werden.

35. Eine (Co)polymeremulsion oder -suspension, die durch das Verfahren gemäß Anspruch 1 hergestellt ist, wobei das darin enthaltene (Co)polymer eine oder mehrere Eigenschaften aufweist, die ausgewählt sind aus der Gruppe, bestehend aus einem vordefinierten Molekulargewicht, einer engen Molekulargewichtsverteilung, eindeutig definierten Endgruppen, einer kontrollierten Zusammensetzung und einem kontrollierten Aufbau.

36. Die (Co)polymeremulsion oder -suspension nach Anspruch 35, wobei das darin enthaltene (Co)polymer ausreichend stabil ist, um seine Eigenschaften nicht signifikant zu ändern, nachdem es über mehrere Stunden auf 150 °C gehalten wurde.

37. Die (Co)polymeremulsion oder -suspension nach Anspruch 35, wobei das (Co)polymer eine Molekulargewichtsverteilung (Mw/Mn) von <1,5 und bekannte Endgruppen aufweist.

## Revendications

1. Procédé de préparation d'une émulsion ou d'une suspension de (co)polymère préparée par une polymérisation radicalaire contrôlée/vivante comprenant les étapes de :
polymérisation d'un ou de plusieurs monomères (co)polymérisables par radicaux en présence d'un système comprenant initialement :
(a) un milieu de suspension,
(b) un tensioactif,
(c) un initiateur ayant un ou plusieurs atomes ou groupes pouvant être transférés par des radicaux ;
(d) un système catalytique comprenant :
(i) un composé de métal de transition capable de participer à un cycle rédox avec l'initiateur et
(ii) un ou plusieurs ligands contenant N, O, P ou S qui forment une coordination avec le métal de transition dans une liaison σ ou une liaison π, un quelconque composé contenant du C qui peut former une coordination avec le métal de transition dans une liaison π, ou un quelconque ligand contenant du carbone qui forme une coordination dans une liaison σ carbone-métal de transition mais qui ne forme pas de liaison carbone-carbone avec ledit monomère dans les conditions de polymérisation, où ledit système catalytique, dans les deux états d'oxydation, est au moins partiellement soluble dans la phase monomère/polymère générée pendant ladite polymérisation ,
pour former une émulsion ou une suspension de (co)polymère.

2. Procédé selon la revendication 1, comprenant de plus l'isolement dudit (co)polymère.

3. Procédé selon la revendication 1, dans lequel le milieu de suspension est un liquide inorganique.

4. Procédé selon la revendication 3, dans lequel le milieu de suspension est l'eau.

5. Procédé selon la revendication 4, dans lequel le rapport de la phase organique à l'eau est compris entre 1 :100 et 100 :1.

6. Procédé selon la revendication 4, dans lequel le rapport de la phase organique à l'eau est compris entre 1 :10 et 10 :1.

7. Procédé selon la revendication 1, dans lequel le milieu de suspension est tamponné.

8. Procédé selon la revendication 1, dans lequel le tensioactif est un tensioactif non ionique.

9. Procédé selon la revendication 1, dans lequel le tensioactif est un tensioactif ionique.

10. Procédé selon la revendication 9, dans lequel le tensioactif est un tensioactif cationique.

11. Procédé selon la revendication 1, dans lequel le tensioactif est présent à une concentration de 0,01%.

12. Procédé selon la revendication 1, dans lequel le tensioactif contrôle la stabilité de l'émulsion.

13. Procédé selon la revendication 12, dans lequel le tensioactif forme une émulsion stable.

14. Procédé selon la revendication 2, dans lequel le tensioactif permet la coagulation du (co)polymère après la polymérisation des (co)monomères pour permettre l'isolement du (co)polymère.

15. Procédé selon la revendication 1, dans lequel le rôle du tensioactif et de l'initiateur est combiné dans une unique molécule de tensioactif/initiateur.

16. Procédé selon la revendication 15, dans lequel le tensioactif/initiateur est une macromolécule.

17. Procédé selon la revendication 16, dans lequel la macromolécule est préparée *in situ.*

18. Procédé selon la revendication 16, dans lequel la macromolécule est au moins partiellement soluble dans une ou plusieurs phases de l'émulsion.

19. Procédé selon la revendication 18, dans lequel la macromolécule est au moins partiellement soluble dans toutes les phases de l'émulsion.

20. Procédé selon la revendication 1, dans lequel l'initiateur est préparé *in situ.*

21. Procédé selon la revendication 1, dans lequel l'initiateur est soluble dans la phase organique.

22. Procédé selon la revendication 1, dans lequel l'initiateur est soluble dans le milieu de suspension.

23. Procédé selon la revendication 1, dans lequel l'initiateur est un macroinitiateur.

24. Procédé selon la revendication 23, dans lequel le macroinitiateur est préparé *in situ.*

25. Procédé selon la revendication 23, dans lequel le macroinitiateur est au moins partiellement soluble dans une ou plusieurs phases de l'émulsion.

26. Procédé selon la revendication 25, dans lequel le macroinitiateur est au moins partiellement soluble dans toutes les phases de l'émulsion.

27. Procédé selon la revendication 1, dans lequel l'initiateur est le dernier composant ajouté au milieu réactionnel initial.

28. Procédé selon la revendication 1, dans lequel le catalyseur est formé *in situ* par réduction d'un métal d'état d'oxydation supérieur.

29. Procédé selon la revendication 1, dans lequel un ou plusieurs monomères peuvent être ajoutés en continu, périodiquement ou successivement à la polymérisation pour préparer des émulsions ou des suspensions de copolymères statistiques, en gradient ou séquencés.

30. Procédé selon la revendication 29, dans lequel le ou les monomères sont ajoutés en masse ou sous forme d'une seconde émulsion.

31. Procédé selon la revendication 1, comprenant de plus la mise en contact de l'émulsion avec une matière qui absorbe sélectivement le catalyseur au métal de transition.

32. Procédé selon la revendication 31, dans lequel ladite matière qui absorbe sélectivement le catalyseur au métal de transition est une résine d'échange d'ions.

33. Procédé selon la revendication 31, comprenant de plus l'isolement du (co)polymère pour fournir un (co)polymère dépourvu de catalyseur.

34. Procédé selon la revendication 1, dans lequel le milieu de suspension est un milieu organique et le ou les monomères (co)polymérisables par des radicaux sont dissous dans un solvant inorganique.

35. Emulsion ou suspension de (co)polymère préparée selon le procédé de la revendication 1, dans laquelle le (co)polymère qui y est contenu présente une ou plusieurs caractéristiques choisies dans le groupe consistant en poids moléculaire prédéfini, étroite distribution de poids moléculaires, groupes terminaux bien définis, composition contrôlée et architecture contrôlée.

36. Emulsion ou suspension de (co)polymère selon la revendication 35, dans laquelle le (co)polymère qui y est contenu est suffisamment stable pour que ses propriétés ne changent pas de façon significative après un maintien à 150°C pendant plusieurs heures.

37. Emulsion ou suspension de (co)polymère selon la revendication 35, dans laquelle le (co)polymère a une distribution de poids moléculaires (PMp/PMn) inférieure à 1,5 et des groupes terminaux connus.
